(19)

**Europäisches Patentamt**
**European Patent Office**
**Office européen des brevets**

(11) **EP 4 624 606 A1**

(12) **EUROPEAN PATENT APPLICATION**
published in accordance with Art. 153(4) EPC

(43) Date of publication:
**01.10.2025 Bulletin 2025/40**

(21) Application number: **24847520.4**

(22) Date of filing: **29.01.2024**

(51) International Patent Classification (IPC):
*C22C 29/08* (2006.01)    *C22C 29/06* (2006.01)
*C22C 29/02* (2006.01)    *C22C 29/00* (2006.01)
*C22C 1/10* (2023.01)    *B22F 3/00* (2021.01)

(86) International application number:
**PCT/CN2024/074388**

(87) International publication number:
**WO 2025/025551 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 CN 202310939618**

(71) Applicants:
• **Xiamen Tungsten Co., Ltd.**
  **Xiamen, Fujian 361009 (CN)**
• **Xiamen Golden Egret Special Alloy Co., Ltd.**
  **Xiamen, Fujian 361006 (CN)**

(72) Inventors:
• **ZHANG, Taiquan**
  **Xiamen, Fujian 361009 (CN)**

• **ZHENG, Wenqing**
  **Xiamen, Fujian 361009 (CN)**
• **OUYANG, Hui**
  **Xiamen, Fujian 361009 (CN)**
• **WU, Songyi**
  **Xiamen, Fujian 361009 (CN)**
• **LONG, Dongyang**
  **Xiamen, Fujian 361009 (CN)**
• **LUO, Wenyuan**
  **Xiamen, Fujian 361009 (CN)**
• **LIU, Chao**
  **Xiamen, Fujian 361009 (CN)**
• **LIN, Liangliang**
  **Xiamen, Fujian 361009 (CN)**

(74) Representative: **Keller Schneider**
**Patent- und Markenanwälte AG**
**Eigerstrasse 2**
**Postfach**
**3000 Bern 14 (CH)**

(54) **BINDER-PHASE-FREE HARD ALLOY, AND PREPARATION METHOD THEREFOR AND USE THEREOF**

(57) The present invention relates to the technical field of hard alloys. Disclosed are a binder-phase-free hard alloy, and a preparation method therefor and the use thereof. Since the content of a binder-phase metal in the binder-phase-free hard alloy as provided is less than or equal to 1 wt%, WC crystal grains are difficult to grow into a plate-shaped morphology by means of dissolution-precipitation in the binder-phase metal, and the diffusion growth rate of each crystal plane and crystal boundary of the WC crystal grains is directionally controlled by adding elements such as boron, titanium, chromium and vanadium and controlling the amounts thereof; therefore, a portion of the crystal grains is controlled to grow into a polygonal lamellar morphology, crystal grains with a polygonal lamellar morphology are prepared under the conditions of substantially no binder-phase metal being present and flattening treatment not being required for raw material powder, the toughness of the binder-phase-free hard alloy is effectively improved, and the hardness is

prevented from being significantly reduced to decrease the wear resistance.

FIG. 1

**Description**

**TECHNICAL FIELD**

The present invention relates to the technical field of cemented carbide technology, and in particular to a binderless cemented carbide and preparation method therefor and use thereof.

**BACKGROUND**

Traditional WC-Co (Ni, Fe)-other additive cemented carbide has been widely used in many fields such as cutting tools, molds, mining tools, and wear-resistant parts due to its excellent comprehensive properties such as strength, hardness, toughness and wear resistance. Traditional cemented carbide is mainly prepared by powder metallurgy, that is, WC powder, binder phase powder (mainly including Co, Ni, or Fe, with a weight content of generally 6wt.% to 25wt.%) and other additive powders are firstly mixed by ball-milling, and then the mixed powder is molded to obtain a green body, and thirdly the green body is sintered to obtain a sintered cemented carbide. During the sintering process, WC grains will grow by dissolving fine WC particles (or grains) in the binder liquid phase and then precipitating tungsten and carbon atoms on the undissolved WC grains. Since WC is a hexagonal close-packed (HCP) crystal structure and is easy to grow preferentially, the WC grains in traditional cemented carbides are usually in the shape of triangular prisms.

In order to improve the hardness and toughness of traditional cemented carbides, those skilled in the art utilize the anisotropic characteristics that the {0001} end crystal plane of HCP structured WC has a much higher hardness than the {1100} prismatic crystal plane, to transform the morphology of WC grains from the usual triangular prism shape to a plate-like (flake-like) shape, that is, to promote the lateral growth of WC grain prismatic planes and increase the proportion of {0001} crystal planes, thereby obtaining cemented carbides with both high hardness and toughness. To obtain plate-like (flake-like) WC grains, it is usually necessary to use flattened raw material powders, such as tungsten powder, tungsten carbide powder, or tungsten-cobalt-carbon compound powder. During sintering, the growth rate along the flattened direction is greater than that in the vertical direction, thus forming plate-like (flake-like) WC grains. However, the above scheme has the following shortcomings: (1) the process of flattening the raw material powder is complicated; (2) since the plate-like grains formed during sintering also grow in the vertical direction, the thickness of the formed plate-like grains is often thicker (generally greater than 0.8 $\mu$m); and (3) due to the dissolution-precipitation growth mechanism, almost all plate-like grains are formed, making it difficult to quantitatively control the content of plate-like grains.

In addition, due to the inherent characteristic of high content of binder phase metals, traditional cemented carbides have good toughness, with fracture toughness $K_{1C}$ generally higher than 7 MPa $\cdot$ m$^{1/2}$. However, their hardness (Vickers hardness HV10 is generally not greater than 2200) and surface smoothness are not ideal. In order to improve their hardness and surface smoothness, binderless cemented carbides have been developed, which refer to tungsten carbide-based cemented carbides with a binder phase metal (Co, Ni or Fe) content of less than 1 wt.%. Due to the extremely low content of binder phase in this type of cemented carbide, also known as tungsten carbide-based ceramic materials, in this material system, the binder phase should strictly be referred to as a sintering aid. Compared to traditional cemented carbides, binderless cemented carbides have excellent wear resistance, oxidation resistance, corrosion resistance, and polishing properties. Therefore, it is widely used in wear-resistant fields such as ultra-mirror surface glass lens molds, waterjet sand tubes, ultra-high pressure nozzles, and high wear-resistant sealing rings. However, also due to the extremely low content of binder phase, although its hardness HV10 is generally higher than 2300, its toughness is poor (usually $K_{1C}$ = 2 MPa $\cdot$ m$^{1/2}$ to 3 MPa $\cdot$ m$^{1/2}$). Even if the WC grain size is reduced to the submicron level of 0.4 $\mu$m, its toughness can only reach $K_{1C}$ = 4 MPa $\cdot$ m$^{1/2}$ to 5 MPa $\cdot$ m$^{1/2}$. This performance defect seriously limits its application range and is difficult to meet the application environment with impact load, especially in cutting tools.

Therefore, how to improve the toughness of binderless cemented carbide is an urgent problem to be solved in this field.

In view of this, the present invention is proposed.

**SUMMARY OF THE INVENTION**

The object of the present invention is to provide a binderless cemented carbide and a preparation method therefor, aiming to significantly improve the toughness of the material without significantly reducing the hardness and then causing a decrease in wear resistance.

Another object of the present invention is to provide the use of the above-mentioned binderless cemented carbide in the preparation of cutting tools, molds, or mining tools.

The present invention is implemented as follows.

In a first aspect, the present invention provides a binderless cemented carbide, which mainly comprises hard phases; the grain morphology of the hard phase comprises ultrafine grains and flake-like grains, wherein the ultrafine grains have an average grain size ranging from 0.2 μm to 0.4 μm, and the flake-like grains are in the shape of polygonal flakes, a ratio of polygonal equivalent circle diameter to thickness of the flake-like grains is (10 to 60): 1.

In an optional embodiment, the volume content of flake-like grains in the binderless cemented carbide is in a range from 10% to 70%;

preferably, the polygonal equivalent circle diameter of the flake-like grains is in a range from 2 μm to 6 μm, and the thickness of the flake-like grains is in a range from 0.1 μm to 0.3 μm; and

preferably, the flake-like grains are uniformly distributed in the polycrystalline matrix formed by the ultrafine grains.

In an optional embodiment, in terms of mass percentage, the chemical composition of the binderless cemented carbide comprises: 0% to 1% of binder phase metal, 0.01% to 0.03% of boron, 0.5% to 3% of titanium, 1% to 3% of tantalum, 0% to 2% of niobium, 0.8% to 1.2% of chromium, 0.2% to 0.4% of vanadium, 6.303% to 6.841% of carbon, with the balance being tungsten and inevitable impurities.

In an optional embodiment, in terms of mass percentage, the chemical composition of the binderless cemented carbide comprises: 0.1% to 0.6% of binder phase metal, 0.01% to 0.03% of boron, 1% to 2% of titanium, 1.5% to 2.5% of tantalum, 0.5% to 1.5% of niobium, 0.9% to 1.1% of chromium, 0.2% to 0.4% of vanadium, 6.423% to 6.653% of carbon, with the balance being tungsten and inevitable impurities;

preferably, the binder phase metal is selected from at least one of cobalt, nickel, and iron.

In a second aspect, the present invention provides a method for preparing the binderless cemented carbide according to any one of the above-mentioned embodiments, the method comprises:

preparing and mixing raw materials according to the chemical composition of the binderless cemented carbide to obtain a powdery mixture; and

treating the powdery mixture before sintering to obtain a green body to be sintered, and sintering the green body to be sintered.

In an optional embodiment, the preparation process of the powdery mixture comprises: mixing the raw material powder weighed according to the chemical composition of the binderless cemented carbide by wet ball-milling, and then drying it;

preferably, the raw material powder comprises: binder phase metal powder, titanium tungsten carbide powder, tantalum carbide powder, niobium carbide powder, tungsten borides powder, chromium carbide powder, vanadium carbide powder, tungsten carbide powder, and inevitable impurities;

preferably, the binder phase metal powder is a single metal powder or an alloy powder, and when the binder phase metal powder is cobalt powder, the content of hexagonal close-packed crystal structure in the powder is greater than 90 wt.%;

preferably, the titanium tungsten carbide powder is a solid solution powder with a chemical formula of $(Ti_xW_{1-x})C$, x=0.6 to 0.8;

preferably, the tungsten borides powder is WB powder; and

preferably, an overall average particle size of the raw material powder is in a range from 0.1 μm to 1.5 μm; more preferably, an average particle size of the tungsten carbide powder is in a range from 0.1 μm to 0.4 μm, an average particle size of the binder phase metal powder is in a range from 0.2 μm to 0.6 μm, and an average particle size of other raw material powders is in a range from 0.1 μm to 1.5 μm. The morphology of the raw material powder can be spherical, nearly spherical, or equiaxed shapes.

In an optional embodiment, the process of mixing by wet ball-milling comprises: firstly, ball-milling the other powders except for the binder phase metal powder and a shaping agent powder for 24h to 36h, then adding the binder phase metal powder and ball-milling for 24h to 36h, and finally adding the shaping agent powder and ball-milling for 15h to 20h;

preferably, the shaping agent powder is at least one of paraffin wax and polyethylene glycol;

preferably, a mass ratio of ball-to-powder used in the wet ball-milling is (4 to 6): 1; and

preferably, a medium used for wet ball-milling is alcohol.

In an optional embodiment, the treating process before sintering comprises: molding the powdery mixture to obtain a preliminary green body, and debinding the preliminary green body to obtain a green body to be sintered.

In an optional embodiment, the process of sintering the green body to be sintered comprises: firstly, vacuum-sintering the green body to be sintered to obtain a pre-sintered body, and then performing hot isostatic pressing sintering on the pre-sintered body;

preferably, the vacuum-sintering is carried out at a temperature ranging from 1540°C to 1580°C and a pressure less than or equal to 30Pa for a holding time ranging from 1h to 3h;
preferably, the hot isostatic pressing sintering is carried out at a temperature ranging from 1400°C to 1450°C and a pressure ranging from 150MPa to 300MPa for a holding time ranging from 1h to 3h; and
more preferably, the hot isostatic pressing sintering is carried out under an inert atmosphere.

In a third aspect, the present invention provides use of the binderless cemented carbide according to any one of above-mentioned embodiments or the binderless cemented carbide prepared by the method according to any one of above-mentioned embodiments in the preparation of cutting tools, molds, or mining tools.

The present invention has the following beneficial effects: due to the fact that the content of the binder phase metal in the binderless cemented carbide provided by the present invention is less than or equal to 1 wt.%, it is difficult for WC grains to grow into a plate-like morphology through dissolution-precipitation in the binder phase metal. The inventor added elements such as boron, titanium, chromium, and vanadium and controlled their dosage to achieve directional control of the diffusion growth rate of WC grain boundaries on each crystal plane, thereby controlling the growth of some grains to form flake-like morphology, and achieving the preparation of polygonal flake-like grains under the conditions of basically no binder phase metal and no need for flattening treatment of the raw material powder, effectively improving the toughness of the binderless cemented carbide without significantly reducing its hardness and then reducing its wear resistance.

## BRIEF DESCRIPTION OF THE DRAWINGS

In order to provide a clearer explanation of the technical solution of the embodiments of the present invention, a brief introduction will be given below to the accompanying drawings required for use in the embodiments. It should be understood that the following drawings only illustrate certain embodiments of the present invention and should not be considered as limiting the scope. For those skilled in the art, other relevant drawings can be obtained based on these drawings without creative labor.

FIG. 1 is an image of grain morphology (low magnification image) in a fracture surface of the binderless cemented carbide prepared in Example 1.2 of the present invention;
FIG. 2 is an image of grain morphology (high magnification image) in a fracture surface of the binderless cemented carbide prepared in Example 1.2 of the present invention;
FIG. 3 is an image of grain morphology in a fracture surface of traditional cemented carbide prepared according to Comparative Example 1.1 provided by the present invention; and
FIG. 4 is an image of grain morphology in a fracture surface of the binderless cemented carbide prepared according to Comparative Example 3.2 provided by the present invention.

## DETAILED DESCRIPTION

In order to clarify the object, technical solution, and advantages of the embodiments of the present invention, a clear and complete description of the technical solution in the embodiments of the present invention will be provided below. If specific conditions are not specified in the implementation examples, the conventional conditions or conditions recommended by the manufacturer are followed. The reagents or instruments used without specifying the manufacturer are all conventional products that can be obtained through commercial purchase.

In an embodiment of the present invention, a binderless cemented carbide is provided, in terms of mass percentage, the chemical composition of the binderless cemented carbide comprises: 0% to 1% of binder phase metal, 0.01% to 0.03% of boron, 0.5% to 3% of titanium, 1% to 3% of tantalum, 0% to 2% of niobium, 0.8% to 1.2% of chromium, 0.2% to 0.4% of vanadium, 6.303% to 6.841% of carbon, with the balance being tungsten and unavoidable impurities.

It should be noted that the content of the binder phase metal added to the raw material of the binderless cemented carbide provided in the embodiments of the present invention is less than or equal to 1 wt.%, and it is difficult for WC grains to grow into a flake-like morphology through dissolution-precipitation in the binder phase metal. The inventor added elements such as boron, titanium, chromium, and vanadium (in the form of carbide powder during the preparation process) and controlled their dosage to achieve directional control of the diffusion growth rate of the grain boundaries on each crystal plane of WC grains, thereby controlling the growth of some grains to form a polygonal flake-like morphology. Polygonal flake-like morphology grains can be prepared under conditions of basically no binder phase metal and no need for flattening treatment of the raw material powder, effectively improving the toughness of binderless cemented carbides without significantly reducing hardness and wear resistance.

Specifically, the content of binder phase metal can be 0.0%, 0.1%, 0.2%, 0.3%, 0.4%, 0.5%, 0.6%, 0.7%, 0.8%, 0.9%, 1.0% and so on; the content of boron can be 0.01%, 0.02%, 0.03% and so on; the content of titanium can be 0.5%, 0.8%, 1.0%, 1.2%, 1.5%, 1.7%, 2.0%, 2.2%, 2.5%, 2.7%, 3.0% and so on; the content of tantalum can be 1.0%, 1.2%, 1.5%, 1.7%, 2.0%, 2.2%, 2.5%, 2.7%, 3.0% and so on; the content of niobium can be 0.0%, 0.2%, 0.5%, 0.8%, 1.0%, 1.2%, 1.5%, 1.7%, 2.0%; the content of chromium can be 0.8%, 0.9%, 1.0%, 1.1%, 1.2% and so on; the content of vanadium can be 0.2%, 0.3%, 0.4% and so on; the carbon content can be 6.303%, 6.4%, 6.5%, 6.6%, 6.7%, 6.8%, 6.841% and so on; and the balance is tungsten and inevitable impurities.

In some embodiments, in terms of mass percentage, the chemical composition of the binderless cemented carbide comprises: 0.1% to 0.6% of binder phase metal, 0.01% to 0.03% of boron, 1% to 2% of titanium, 1.5% to 2.5% of tantalum, 0.5% to 1.5% of niobium, 0.9% to 1.1% of chromium, 0.2% to 0.4% of vanadium, 6.423% to 6.653% of carbon, with the balance being tungsten and inevitable impurities. By optimizing the content of each element, the toughness and hardness of the alloy can be further improved.

In some embodiments, the binder phase metal is selected from at least one of cobalt, nickel, and iron, and can be any one or several of the above. The binderless cemented carbide is mainly composed of hard phases, and the initial binder phase metal or alloy components react in situ with other components to form hard phases. The term "mainly" herein means that it is basically a hard phase, specifically, the mass percentage of the hard phase reaches more that 99%.

In some embodiments, the grain morphology of the hard phase in the binderless cemented carbide comprises ultrafine grains and flake-like grains, and may also comprise other grain morphologies. The case can be that the grain morphology of all hard phases can be composed of ultrafine grains and flake-like grains, and the flake-like grains can be uniformly distributed in the polycrystalline matrix formed by ultrafine grains. In the grain morphology of cemented carbides, the volume content of flake-like grains can range from 10% to 70%, such as 10%, 20%, 30%, 40%, 50%, 60%, 70% and so on. Due to the presence of flake-like grains, the fracture toughness of the alloy is greatly increased.

In some embodiments, the average grain size of ultrafine grains in the polycrystalline matrix is in a range from 0.2 $\mu$m to 0.4 $\mu$m, such as 0.2 $\mu$m, 0.3 $\mu$m, 0.4 $\mu$m and so on.

In some embodiments, the flake-like grains are in a shape of polygonal flakes, with a polygonal equivalent circle diameter of 2 $\mu$m to 6 $\mu$m and a thickness of 0.1 $\mu$m to 0.3 $\mu$m. Moreover, a ratio of polygonal equivalent circle diameter to thickness of the flake-like grains is (10 to 60):1, and the polygonal equivalent circle diameter is more than 10 times the thickness, making it an ultra-thin flake-like grains. Specifically, the polygonal equivalent circle diameter of flake-like grains can be 2 $\mu$m, 3 $\mu$m, 4 $\mu$m, 5 $\mu$m, 6 $\mu$m and so on, and the thickness can be 0.1 $\mu$m, 0.2 $\mu$m, 0.3 $\mu$m and so on. The ratio of polygonal equivalent circle diameter to thickness can be 10:1, 12:1, 15:1, 17:1, 20:1, 22:1, 25:1, 27:1, 30:1, 32:1, 35:1, 37:1, 40:1, 42:1, 45:1, 47:1, 50:1, 52:1, 55:1, 57:1, 60:1 and so on.

The embodiment of the present invention also provides a method for preparing a binderless cemented carbide, and the method comprises: preparing the binderless cemented carbide according to its chemical composition, so that the chemical composition of the prepared binderless cemented carbide meets the requirements of the elemental composition in the binderless cemented carbide mentioned above. Specifically, the following steps may be included:

S1. Mixing the raw materials

The various raw material powders are prepared according to the chemical composition of the binderless cemented carbide, and the powders of the various raw materials are mixed to obtain a powdery mixture for use.

In some embodiments, the preparation process of the powdery mixture comprises: mixing the raw material powder weighed according to the chemical composition by wet ball-milling, and then drying. The drying method is unlimited, and spray drying can be used.

In some embodiments, the raw material powder comprises: binder phase metal powder, titanium tungsten carbide powder, tantalum carbide powder, niobium carbide powder, tungsten borides powder, chromium carbide powder, vanadium carbide powder, tungsten carbide powder, and inevitable impurities. The amount of raw materials used is proportioned according to the chemical composition of the target product.

It should be noted that chromium carbide powder and vanadium carbide powder help to suppress the grain boundary diffusion and growth of WC grains. Compared with traditional cemented carbides, due to the extremely low content of binder phase, the formation of superhard borides further reduces the dissolution of WC in the binder phase metal. Therefore, the probability of WC grains growing through the dissolution-precipitation mechanism in the binder phase metal is very low. The vast majority of WC grains are refined by suppressing the grain boundary diffusion of WC grains through chromium carbide or vanadium carbide particles, thereby forming an ultrafine polycrystalline matrix with an average grain size of 0.2 $\mu$m to 0.4 $\mu$m. At the same time, the interaction between chromium and vanadium with boron elements can also affect the morphological characteristics of flake-like grains and element distribution uniformity.

Further, the binder phase metal powder can be a single metal powder or alloy powder. The single metal powder can be a single cobalt powder, nickel powder, iron powder and so on. The alloy powder can be an alloy raw material formed by two or three elements from cobalt, nickel, and iron.

In some embodiments, when the binder phase metal powder is cobalt powder, the content of hexagonal close-packed (HCP) crystal structure in the powder is greater than 90 wt.%. Cobalt powder with HCP structure has higher brittleness, which helps to slow down the cold welding agglomeration among the particles during ball-milling and improve the uniformity of ball-milling mixing.

In some embodiments, titanium tungsten carbide powder is a solid solution powder with a chemical formula of $(Ti_xW_{1-x})C$, x=0.6 to 0.8, such as 0.6, 0.7, 0.8 and so on. The use of titanium tungsten carbide solid solution powder helps to reduce the sintering temperature, while Ti atoms are prone to deposit on the (0001) plane of WC grains, thereby hindering the diffusion growth of WC grains on the (0001) plane; that is to say, the growth of WC grains along the [0001] direction can be suppressed, thereby promoting the formation of flake-like grains, and the content of flake-like grains can also be controlled. In addition, compared with using TiC powder, using titanium tungsten carbide solid solution powder helps to reduce the sintering temperature, which is not only more conducive to the formation of flake-like grains, but also to sintering densification.

In some embodiments, the tungsten borides powder may be WB powder, which is a commercially available raw material. The density of WB powder and that of WC powder are almost the same, which helps to achieve uniform ball-milling and mixing. At the same time, with the presence of boron element, on the one hand, WB is prone to in-situ reaction with binder phase metals Co, Ni, or Fe to form hard phases of $W_aCo_bB_c$, $W_aNi_bB_c$, or $W_aFe_bB_c$ superhard borides. This not only reduces the sintering temperature, but also helps to relieve the problem of decreased wear resistance caused by the reduced hardness of the alloy due to the presence of soft binder phase metal alloys, thereby improving the material's red hardness as a cutting tool. On the other hand, the formation of superhard boride phases can also improve the high-temperature oxidation resistance of materials. Thirdly, and more importantly, the presence of boron element contributes to the formation of flake-like grains, which may be due to the easy deposition of above superhard borides on the (0001) plane of WC grains. As Ti or Cr elements are strong boride-forming elements, they also easily attract Ti and Cr atoms to deposit on the (0001) plane of WC grains, hindering the diffusion and growth of WC grains along the (0001) plane to form columnar grains, and accelerating the lateral growth rate of each cylindrical plane of WC grains to form flake-like grains morphology.

In some embodiments, the overall average particle size of the raw material powder is in a range from 0.1 $\mu$m to 1.5 $\mu$m, and the overall average particle size of all the above raw materials can be 0.1 $\mu$m, 0.5 $\mu$m, 0.7 $\mu$m, 1.0 $\mu$m, 1.2 $\mu$m, 1.5 $\mu$m and so on. Among them, the average particle size of tungsten carbide powder is in a range from 0.1 $\mu$m to 0.4 $\mu$m, the average particle size of binder phase metal powder is in a range from 0.2 $\mu$m to 0.6 $\mu$m, and the average particle size of other raw material powders is in a range from 0.1 $\mu$m to 1.5 $\mu$m. Other raw material powders refer to other types of powders besides tungsten carbide powder and binder phase metal powder. Specifically, the average particle size of tungsten carbide powder can be 0.1 $\mu$m, 0.2 $\mu$m, 0.3 $\mu$m, 0.4 $\mu$m and so on. The average particle size of binder phase metal powder can be 0.2 $\mu$m, 0.3 $\mu$m, 0.4 $\mu$m, 0.5 $\mu$m, 0.6 $\mu$m and so on. The average particle size of other raw material powders can be 0.1 $\mu$m, 0.5 $\mu$m, 0.8 $\mu$m, 1.0 $\mu$m, 1.2 $\mu$m, 1.5 $\mu$m and so on. The morphology of raw material powder can be spherical, nearly spherical, or equiaxed shape.

In some embodiments, the process of mixing using wet ball-milling comprises: firstly, ball-milling the other powders (i.e. hard phase powders) except for the binder phase metal powder and the shaping agent powder for 24h to 36h, then adding the binder phase metal powder for ball-milling for 24h to 36h, and finally adding the shaping agent powder for ball-milling for 15h to 20h. The rolling wet ball-milling is carried out by gradually adding raw material powder, which makes the particle size of the raw material powder ultrafine. On the one hand, it improves the activity of the raw material powder, and on the other hand, it improves the mixing uniformity of the raw material powder.

It should be noted that firstly ball-milling and mixing other powders except for the binder phase metal powder and the shaping agent powder can avoid the influence of the binder phase metal powder with good plasticity on the crushing of brittle hard phase powder by ball-milling, so as to improve the crushing efficiency and mixing uniformity, so as to promote the formation of highly active ultrafine particles, help to control the growth of flake-like grains during subsequent sintering, and also help to form an ultrafine grain structure. Finally, adding the shaping agent powder for mixing can avoid the influence of the shaping agent powder on the ball-milling process. Since the shaping agent powder has good viscosity and plasticity, if it is added firstly, it will not only cause the raw material powder to agglomerate and mix unevenly, but also lead to the problem of agglomeration and uneven mixing of the shaping agent itself. Therefore, in the embodiments of the present invention, the hard phase powder is firstly crushed and mixed uniformly, then mixed uniformly with the binder phase metal powder, and finally mixed with the shaping agent powder.

Specifically, the ball-milling time for hard phase powder can be 24h, 26h, 28h, 30h, 32h, 34h, 36h and so on. The ball-milling time after adding binder phase metal powder can be 24h, 26h, 28h, 30h, 32h, 34h, 36h and so on. The ball-milling time for adding shaping agent powder can be 15h, 16h, 17h, 18h, 19h, 20h and so on.

In some embodiments, the shaping agent powder is at least one of paraffin wax and polyethylene glycol, and can be a mixture of any one or both of the above.

In some embodiments, the mass ratio of ball to material used in wet ball-milling is (4 to 6): 1, such as 4:1, 5:1, 6:1 and so on; the medium used for wet ball-milling can comprise but is not limited to alcohol.

S2. Treatment before sintering

The powdery mixture is subjected to treatment before sintering to obtain a green body to be sintered, and the specific process of treatment before sintering is not limited.

In some embodiments, the process of treatment before sintering comprises: molding the powdery mixture to obtain the preliminary green body, and debinding the preliminary green body; and removing the shaping agent from the green body to obtain a green body to be sintered.

S3. Sintering

The green body to be sintered can be sintered by combining vacuum-sintering and hot isostatic pressing sintering, which is beneficial for improving the toughness and hardness of the prepared binderless cemented carbide. In practical operation, the process of sintering the green body to be sintered comprises: firstly, vacuum-sintering the green body to be sintered to obtain a pre-sintered body, and then hot isostatic pressing sintering the pre-sintered body to obtain the final nonporous binderless cemented carbide.

In some embodiments, the vacuum-sintering is carried out at a temperature ranging from 1540°C to 1580°C for a holding time ranging from 1h to 3h under a pressure less than or equal to 30Pa. By selecting an appropriate vacuum-sintering temperature, it helps to promote sintering densification without causing abnormal grain growth. If the vacuum-sintering temperature is lower than 1540°C, the pre-sintered body contains more open pores, which cannot meet the density requirements of the next step of hot isostatic pressing sintering for the pre-sintered body. If the vacuum-sintering temperature is higher than 1580°C, the edge length and thickness of the flake-like grains will increase, and the ultrafine grains will also grow, resulting in a decrease in the toughness and hardness of the binderless cemented carbide.

Specifically, the vacuum-sintering temperature can be 1540°C, 1550°C, 1560°C, 1570°C, 1580°C and so on, and the holding time can be 1h, 2h, 3h and so on.

In some embodiments, the hot isostatic pressing sintering temperature is in a range from 1400°C to 1450°C, the holding time is in a range from 1h to 3h, and the pressure is in a range from 150MPa to 300MPa. The hot isostatic pressing sintering is carried out under an inert atmosphere (such as argon gas). By optimizing the parameters of hot isostatic pressing sintering, the residual pores in the pre-sintered body are eliminated while fully ensuring that the grains in the pre-sintered body no longer grow significantly, resulting in a nonporous binderless cemented carbide.

Specifically, the hot isostatic pressing sintering temperature can be 1400°C, 1410°C, 1420°C, 1430°C, 1440°C, 1450°C and so on, the holding time can be 1h, 2h, 3h and so on, and the pressure can be 150MPa, 180MPa, 200MPa, 220MPa, 250MPa, 270MPa, 300MPa and so on. Generally, when selecting a slightly higher hot isostatic pressing temperature, the sintering pressure can be appropriately reduced. When selecting a slightly lower hot isostatic pressing temperature, the sintering pressure can be appropriately increased. Usually, to avoid grain growth, lower hot isostatic pressing temperatures and higher sintering pressures are preferred.

It should be noted that the embodiments of the present invention provide a binderless cemented carbide and its preparation method, which can prepare a binderless cemented carbide composed of ultrafine grains and flake-like grains. The flake-like grains are uniformly distributed in the polycrystalline matrix composed of ultrafine grains, and the presence of flake-like grains greatly increases its fracture toughness. The preparation method provided in the embodiments of the present invention does not require flattening treatment of the raw material powder during the preparation process, nor does it require growth through the dissolution-precipitation mechanism of WC in the binder phase metal, which can form flake-like grains. The preparation method is simple and effective. In addition, the binderless cemented carbide prepared in the embodiments of the present invention retains the ultrafine grained polycrystalline matrix and reduces the influence of softer bonded pure metal phases or bonded metal alloy phases, and is mainly composed of hard phases. Therefore, binderless cemented carbides with both high toughness and hardness are obtained.

In the embodiments of the present invention, the use of the above-mentioned binderless cemented carbide in the preparation of cutting tools, molds, or mining tools is also provided. By utilizing its high toughness and hardness characteristics, the prepared cutting tools, molds, or mining tools and other products also have excellent performance.

The following provides a further detailed description of the microstructure characteristics and properties of the binderless cemented carbide prepared by the present invention, in conjunction with examples.

Experimental group 1

Experimental group 1 comprises Examples 1.1 to 1.5 and Comparative Examples 1.1 to 1.2, mainly adjusting the content of Co, specifically as follows:

Example 1.1

This example provides a method for preparing a binderless cemented carbide, which adopts the following steps for preparation.

(1) The raw material powders were accurately weighed according to the specified ratio and mixed using a stepwise addition of raw material powders by rolling wet ball-milling method with a ball-to-powder ratio of 5:1. Alcohol was used as the medium in the wet ball-milling process. The mixed powder was then prepared by spray drying. The composition of the raw material powders by mass percentage was as follows: 3.922% of $(Ti_{0.75}W_{0.25})C$, 2.133% of TaC, 1.129% of NbC, 0.360% of WB, 1.154% of $Cr_3C_2$, 0.371% of VC, and the balance of WC. The used WC, $(Ti_{0.75}W_{0.25})C$, TaC, NbC, WB, $Cr_3C_2$, and VC raw material powders all exhibited an equiaxed morphology. The process of stepwise addition of raw material powders comprised: firstly, ball-milling the other brittle powders (excluding the binder phase metal cobalt powder and the shaping agent) for 30h; then, adding the binder phase metal cobalt powder followed by another 30h of ball-milling (this step was omitted if the initial binder phase metal powder content was 0); finally, adding the paraffin wax shaping agent powder followed by another 18h of ball-milling.
(2) The green body was prepared by mold pressing.
(3) The obtained green body was subjected to a debinding process using an argon negative-pressure technique.
(4) The debinded green body was vacuum-sintered at a sintering temperature of 1560°C for a holding time of 2h under a pressure less than or equal to 30 Pa to obtain a pre-sintered body.
(5) The pre-sintered body was subjected to hot isostatic pressing sintering at a temperature of 1430°C for a holding time of 2h under an argon pressure of 200 MPa.

Example 1.2 to Example 1.5

The difference between Example 1.2 to 1.5 and Example 1.1 is only that the composition of the raw material powder has been adjusted for the binderless cemented carbide, specifically as shown in Table 1.

Comparative Example 1.1 to Comparative Example 1.2

The only difference between Comparative Example 1.1 to 1.2 and Example 1 is that the cemented carbide has been adjusted the composition of the raw material powder and sintering process. The composition of the raw material powder in cemented carbide is shown in Table 1. The sintering processes used for Comparative Examples 1.1 and 1.2 are as follows:
The vacuum-sintering temperatures used for Comparative Examples 1.1 and 1.2 were 1420°C and 1400°C, respectively, with a holding time of 2h and a pressure of less than or equal to 30Pa. Subsequently, a low-pressure sintering process was employed, the sintering temperatures for Comparative Examples 1.1 and 1.2 were 1400°C and 1380°C, respectively, the holding time was 2h, and the argon pressure was 5MPa.
Note: Comparative Examples 1.1 and 1.2 are formulations of traditional cemented carbides with higher cobalt content. If the same vacuum-sintering temperature (such as 1560°C) is used as the binderless cemented carbide, it will result in severe over-sintering.

Table 1. Chemical formulae and ratios (wt.%) of raw material powder used in Experiment group 1.

| Case Number | Co | $(Ti_{0.75}W_{0.25})C$ | TaC | NbC | WB | $Cr_3C_2$ | VC | WC |
|---|---|---|---|---|---|---|---|---|
| Example 1.1 | 0.0 | 3.922 | 2.133 | 1.129 | 0.360 | 1.154 | 0.371 | balance |
| Example 1.2 | 0.2 | 3.922 | 2.133 | 1.129 | 0.360 | 1.154 | 0.371 | balance |
| Example 1.3 | 0.5 | 3.922 | 2.133 | 1.129 | 0.360 | 1.154 | 0.371 | balance |
| Example 1.4 | 0.8 | 3.922 | 2.133 | 1.129 | 0.360 | 1.154 | 0.371 | balance |
| Example 1.5 | 1.0 | 3.922 | 2.133 | 1.129 | 0.360 | 1.154 | 0.371 | balance |
| Comparative Example 1.1 | 6.0 | 3.922 | 2.133 | 1.129 | 0.360 | 1.154 | 0.371 | balance |
| Comparative Example 1.2 | 9.0 | 3.922 | 2.133 | 1.129 | 0.360 | 1.154 | 0.371 | balance |

The content of each chemical component in the prepared cemented carbide was tested as follows: the content of metal elements was tested according to the China national standard of GB/T26050-2010 "Hardmetals-Determination of contents of metallic elements by X-ray fluorescence-Fusion method"; the total carbon content test referred to the China national standard of GB/T42275-2022 "Hardmetals-Determination of total carbon content-High frequency combustion infrared absorption or thermal conductivity method"; the boron element content test referred to the China national standard of GB/T39138.3-2020 "Methods for chemical analysis of gold nickel chromium iron silicon boron alloys-Part 3: Determination of chromium, iron, silicon and boron contents-Inductively coupled plasma atomic emission spectrometry". The test results were shown in Table 2.

Table 2. Chemical composition ratios of cemented carbide in Experiment group 1 (wt.%)

| Case Number | Co | Ti | Ta | Nb | B | Cr | V | W | C |
|---|---|---|---|---|---|---|---|---|---|
| Example 1.1 | 0.0 | 1.50 | 2.00 | 1.00 | 0.02 | 1.00 | 0.30 | 87.620 | 6.560 |
| Example 1.2 | 0.2 | 1.50 | 2.00 | 1.00 | 0.02 | 1.00 | 0.30 | 87.433 | 6.547 |
| Example 1.3 | 0.5 | 1.50 | 2.00 | 1.00 | 0.02 | 1.00 | 0.30 | 87.151 | 6.529 |
| Example 1.4 | 0.8 | 1.50 | 2.00 | 1.00 | 0.02 | 1.00 | 0.30 | 86.869 | 6.511 |
| Example 1.5 | 1.0 | 1.50 | 2.00 | 1.00 | 0.02 | 1.00 | 0.30 | 86.682 | 6.498 |
| Comparative Example 1.1 | 6.0 | 1.50 | 2.00 | 1.00 | 0.02 | 1.00 | 0.30 | 81.988 | 6.192 |
| Comparative Example 1.2 | 9.0 | 1.50 | 2.00 | 1.00 | 0.02 | 1.00 | 0.30 | 79.172 | 6.008 |

The microstructure and properties of the cemented carbide obtained in Examples 1.1 to 1.5 and Comparative Examples 1.1 to 1.2 were tested, which were shown in Table 3.

Testing method:

(1) Testing of the morphology and size of flake-like grains: testing was performed through SEM observation, the specific steps were as follows: the morphology characteristics were observed through SEM; at least 500 flake-like grains were randomly tested for each sample, and the thickness and polygon area of each flake-like grains were obtained through testing. The polygon was equivalent to a circle using the equal area method, and the equivalent circle diameter was obtained through the following formula:

$$D_i = (4S_i/\pi)^{1/2}$$

In the formula, $S_i$ is the measured value of the polygonal area of the i-th flake-like grains; $D_i$ is the equivalent circle diameter of the i-th flake-like grains polygon.

(2) Testing of flake-like grains content: Based on the polygonal area and thickness of the flake-like grains obtained from the test, the volume of a single flake-like grain was the product of the polygonal area and thickness; the volume content of flake-like grains was obtained by calculating based on the number of flake-like grains in the obtained test volume.

(3) Testing of ultrafine grain size in the matrix: testing was performed through SEM observation; the testing method referred to the China national standard of GB/T3488.2-2018 "Hardmetals-Metallographic determination of microstructure-Part 2 : Measurement of WC grain size".

(4) The testing of fracture toughness and hardness referred to the China industry standard of JB/T12616-2016 "Inspection methods of fracture toughness for hardmetals tool base material" and the China national standard of GB/T7997-2014 "Hardmetals-Vickers hardness test", respectively.

Table 3. Comparison of microstructure and performance parameters of cemented carbide obtained from Experimental group 1

| Case Number | Flake-like grain size ($\mu$m) | | | Flake-like grain content (vol.%) | Average grain size of ultrafine grains ($\mu$m) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter/ thickness | | | | |
| Example 1.1 | 2 to 3 | 0.10 to 0.20 | 10 to 30 | 44.5 | 0.21 | 7.1 | 2484 |
| Example 1.2 | 2 to 5 | 0.10 to 0.20 | 10 to 50 | 45.7 | 0.28 | 7.9 | 2463 |
| Example 1.3 | 3 to 5 | 0.10 to 0.20 | 15 to 50 | 46.2 | 0.31 | 7.9 | 2445 |
| Example 1.4 | 3 to 6 | 0.15 to 0.25 | 12 to 40 | 46.6 | 0.35 | 8.0 | 2422 |
| Example 1.5 | 3 to 6 | 0.20 to 0.30 | 10 to 30 | 47.4 | 0.39 | 8.1 | 2401 |
| Comparative Example 1.1 | Triangular prism shaped grains | | | 0.0 | 0.45 | 8.1 | 2108 |
| Comparative Example 1.2 | Triangular prism shaped grains | | | 0.0 | 0.52 | 8.3 | 2052 |

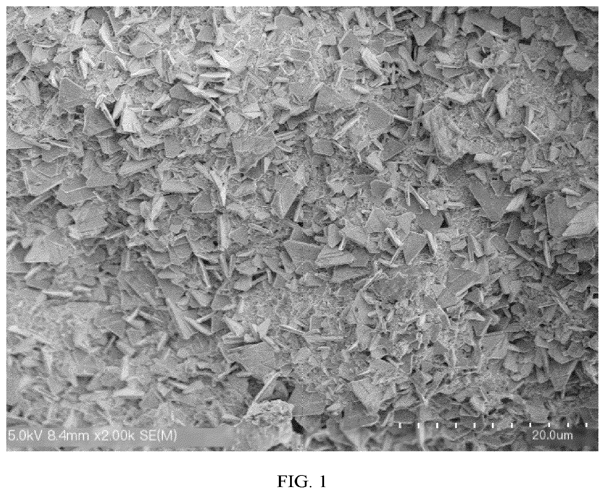

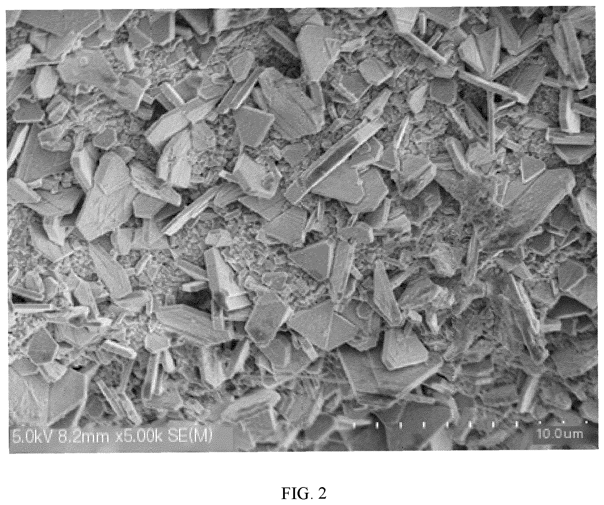

It can be seen from Table 3 that the fracture toughness of the binderless cemented carbides prepared in Examples 1.1 to 1.5 is higher than 7 MPa·m$^{1/2}$, and the hardness is higher than 2400. In Examples 1.1 to 1.5, as the cobalt content of the binder phase increases, the atomic diffusion capacity increases, the polygonal equivalent circle diameter of the formed flake-like grains increases, and thickness also increases, the ratio of polygonal equivalent circle diameter to thickness decreases, and the content of flake-like grains also increases slightly. Correspondingly, the size of ultrafine grains in the matrix also increases slightly, and the typical microstructure is shown in FIG. 1 and FIG. 2.

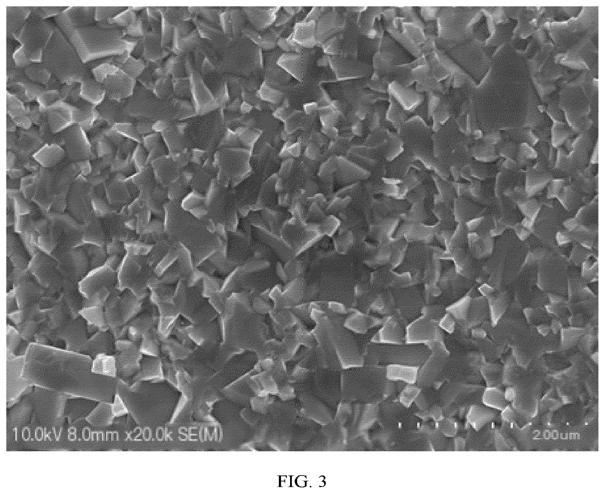

The fracture toughness of the cemented carbides produced by Comparative Examples 1.1 and 1.2 is also higher than 7 MPa·m$^{1/2}$, but the hardness is only below 2108. The Co content in Comparative Examples 1.1 and 1.2 is high. Since the dissolution-precipitation of WC in the liquid phase cobalt is enhanced during the sintering process, in the absence of flattened raw material powder particles as crystal nucleus guidance, even in the presence of boron element, conventional triangular prism shaped grains are still formed, and flake-like grains are not formed. FIG. 3 is the grain morphology of fracture of the cemented carbide obtained from Comparative Example 1.1. On the one hand, as the cobalt content in the binder phase increases, the fracture toughness of cemented carbides increases and the hardness decreases. On the other hand, as the cobalt content of the binder phase increases, the morphology of the flake-like grains changes from flake-like shape to columnar shape, which will lead to a decrease in the fracture toughness of the alloy. Therefore, the comprehensive results show that when the cobalt content of the binder phase reaches 6%, compared with Example 1.5, the toughness of Comparative Examples 1.1 and 1.2 does not increase significantly, but the hardness decreases significantly, with a decrease of 9% to 16%.

Experimental group 2

Experimental group 2 comprises Example 1.2, Examples 2.1 to 2.2, and Comparative Examples 2.1 to 2.2, which mainly adjusted the content of boron element and correspondingly adjusted the types and ratios of raw material powders, specifically shown in Table 4.

Table 4. Chemical formulas and ratios (wt.%) of raw material powders used in Experimental group 2

| Case Number | Co | (Ti$_{0.75}$W$_{0.25}$)C | TaC | NbC | WB | Cr$_3$C$_2$ | VC | WC |
|---|---|---|---|---|---|---|---|---|
| Comparative Example 2.1 | 0.2 | 3.922 | 2.133 | 1.129 | 0.000 | 1.154 | 0.371 | balance |

(continued)

| Case Number | Co | $(Ti_{0.75}W_{0.25})C$ | TaC | NbC | WB | $Cr_3C_2$ | VC | WC |
|---|---|---|---|---|---|---|---|---|
| Example 2.1 | 0.2 | 3.922 | 2.133 | 1.129 | 0.180 | 1.154 | 0.371 | balance |
| Example 1.2 | 0.2 | 3.922 | 2.133 | 1.129 | 0.360 | 1.154 | 0.371 | balance |
| Example 2.2 | 0.2 | 3.922 | 2.133 | 1.129 | 0.540 | 1.154 | 0.371 | balance |
| Comparative Example 2.2 | 0.2 | 3.922 | 2.133 | 1.129 | 0.720 | 1.154 | 0.371 | balance |

The preparation methods of Examples 2.1 to 2.2 and Comparative Examples 2.1 to 2.2 referred to Example 1.1.
The chemical composition test results of the binderless cemented carbide obtained from Examples 2.1, 1.2, 2.2 and Comparative Examples 2.1 to 2.2 were shown in Table 5.

Table 5. Chemical composition ratio (wt.%) of binderless cemented carbide in Experimental group 2

| Case Number | Co | Ti | Ta | Nb | B | Cr | V | W | C |
|---|---|---|---|---|---|---|---|---|---|
| Comparative Example 2.1 | 0.2 | 1.50 | 2.00 | 1.00 | 0.00 | 1.00 | 0.30 | 87.431 | 6.569 |
| Example 2.1 | 0.2 | 1.50 | 2.00 | 1.00 | 0.01 | 1.00 | 0.30 | 87.432 | 6.558 |
| Example 1.2 | 0.2 | 1.50 | 2.00 | 1.00 | 0.02 | 1.00 | 0.30 | 87.433 | 6.547 |
| Example 2.2 | 0.2 | 1.50 | 2.00 | 1.00 | 0.03 | 1.00 | 0.30 | 87.434 | 6.536 |
| Comparative Example 2.2 | 0.2 | 1.50 | 2.00 | 1.00 | 0.04 | 1.00 | 0.30 | 87.435 | 6.525 |

The microstructure and properties of the binderless cemented carbide obtained by Example 1.2, Examples 2.1 to 2.2, and Comparative Examples 2.1 to 2.2 were tested, and shown in Table 6.

Table 6. Comparison of microstructure and performance parameters of binderless cemented carbides obtained from Experimental group 2

| Case Number | Flake-like grain size ($\mu$m) | | | Flake-like grain content (vol.%) | Average grain size of ultrafine grains ($\mu$m) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter/thickness | | | | |
| Comparative Example 2.1 | No flake-like grains | | | 0.0 | 0.22 | 5.4 | 2523 |
| Example 2.1 | 2 to 4 | 0.10 to 0.20 | 10 to 40 | 34.2 | 0.24 | 7.4 | 2446 |
| Example 1.2 | 2 to 5 | 0.10 to 0.20 | 10 to 50 | 45.7 | 0.28 | 7.9 | 2463 |
| Example 2.2 | 3 to 5 | 0.10 to 0.20 | 15 to 50 | 56.8 | 0.35 | 7.8 | 2455 |
| Comparative Example 2.2 | 3 to 6 | 0.20 to 0.50 | 6 to 30 | 57.2 | 0.63 | 6.6 | 2337 |

It can be seen from Table 6 that, when boron element is not added, flake-like grains are not formed, and an ultrafine-grained cemented carbide structure without a binder phase is obtained, with higher hardness but lower toughness. After adding boron element, the formation of flake-like grains leads to a decrease in hardness but an increase in toughness. As the boron content increases, on the one hand, the ratio of the equivalent circle diameter to the thickness of the polygonal shape of the flake-like grains significantly increases, and the content of the flake-like grains also increases, resulting in an increase in its toughness. On the other hand, due to the formation of the $W_aCo_bB_c$ superhard compound phase, the disadvantage of low hardness of the binder phase metal cobalt is improved, and its hardness is also increased. However, if the amount of boron element added is too high, the grains are prone to grow, that is, the size of the flake-like grains and the size of the matrix grains increase, which will lead to a decrease in the fracture toughness and hardness of the alloy.

Experimental group 3

Experimental group 3 comprises Example 1.2, Examples 3.1 to 3.4, and Comparative Examples 3.1 to 3.3, which mainly adjusted the content of titanium element and correspondingly adjusted the types and ratios of raw material powders, as shown in Table 7.

Table 7 Chemical formulas and ratios (wt.%) of raw material powders used in Experimental group 3

| Case Number | Co | $(Ti_{0.73}W_{0.25})C$ | TaC | NbC | WB | $Cr_3C_2$ | VC | WC |
|---|---|---|---|---|---|---|---|---|
| Comparative Example 3.1 | 0.2 | 0.000 | 2.133 | 1.129 | 0.360 | 1.154 | 0.371 | balance |
| Comparative Example 3.2 | 0.2 | 0.523 | 2.133 | 1.129 | 0.360 | 1.154 | 0.371 | balance |
| Example 3.1 | 0.2 | 1.307 | 2.133 | 1.129 | 0.360 | 1.154 | 0.371 | balance |
| Example 3.2 | 0.2 | 2.615 | 2.133 | 1.129 | 0.360 | 1.154 | 0.371 | balance |
| Example 1.2 | 0.2 | 3.922 | 2.133 | 1.129 | 0.360 | 1.154 | 0.371 | balance |
| Example 3.3 | 0.2 | 5.229 | 2.133 | 1.129 | 0.360 | 1.154 | 0.371 | balance |
| Example 3.4 | 0.2 | 7.843 | 2.133 | 1.129 | 0.360 | 1.154 | 0.371 | balance |
| Comparative Example 3.3 | 0.2 | 10.458 | 2.133 | 1.129 | 0.360 | 1.154 | 0.371 | balance |

The preparation methods of Examples 3.1 to 3.4 and Comparative Examples 3.1 to 3.3 referred to Example 1.
The chemical composition test results of the binderless cemented carbides from Example 1.2, Examples 3.1 to 3.4, and Comparative Examples 3.1 to 3.3 were shown in Table 8.

Table 8. Chemical composition ratio (wt.%) of binderless cemented carbide in Experimental group 3

| Case Number | Co | Ti | Ta | Nb | B | Cr | V | W | C |
|---|---|---|---|---|---|---|---|---|---|
| Comparative Example 3.1 | 0.2 | 0.00 | 2.00 | 1.00 | 0.02 | 1.00 | 0.30 | 89.194 | 6.286 |
| Comparative Example 3.2 | 0.2 | 0.20 | 2.00 | 1.00 | 0.02 | 1.00 | 0.30 | 88.959 | 6.321 |
| Example 3.1 | 0.2 | 0.50 | 2.00 | 1.00 | 0.02 | 1.00 | 0.30 | 88.607 | 6.373 |
| Example 3.2 | 0.2 | 1.00 | 2.00 | 1.00 | 0.02 | 1.00 | 0.30 | 88.020 | 6.460 |
| Example 1.2 | 0.2 | 1.50 | 2.00 | 1.00 | 0.02 | 1.00 | 0.30 | 87.433 | 6.547 |
| Example 3.3 | 0.2 | 2.00 | 2.00 | 1.00 | 0.02 | 1.00 | 0.30 | 86.846 | 6.634 |
| Example 3.4 | 0.2 | 3.00 | 2.00 | 1.00 | 0.02 | 1.00 | 0.30 | 85.672 | 6.808 |
| Comparative Example 3.3 | 0.2 | 4.00 | 2.00 | 1.00 | 0.02 | 1.00 | 0.30 | 84.498 | 6.982 |

The microstructure and properties of the binderless cemented carbide were obtained in Example 1.2, Examples 3.1 to 3.4, and Comparative Examples 3.1 to 3.3 were tested, as shown in Table 9.

Table 9. Comparison of microstructure and performance parameters of binderless cemented carbides obtained from Experimental group 3

| Case Number | Flake-like grain size ($\mu$m) | | | Flake-like grain content (vol.%) | Average grain size of ultrafine grains ($\mu$m) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter/thickness | | | | |
| Comparative Example 3.1 | Triangular prism shaped grains, no flake-like grains | | | 0.0 | 0.21 | 5.9 | 2587 |
| Comparative Example 3.2 | Most of them are triangular prism-shaped grains, with a small amount of flake-like grains | | | 0.1 | 0.23 | 6.2 | 2553 |
| Example 3.1 | 2 to 4 | 0.10 to 0.20 | 10 to 40 | 10.1 | 0.25 | 7.3 | 2481 |
| Example 3.2 | 2 to 4 | 0.10 to 0.20 | 10 to 40 | 30.8 | 0.26 | 7.7 | 2476 |
| Example 1.2 | 2 to 5 | 0.10 to 0.20 | 10 to 50 | 45.7 | 0.28 | 7.9 | 2463 |
| Example 3.3 | 2 to 5 | 0.10 to 0.20 | 10 to 50 | 57.3 | 0.33 | 7.8 | 2458 |
| Example 3.4 | 2 to 6 | 0.15 to 0.20 | 10 to 40 | 69.8 | 0.36 | 7.5 | 2431 |
| Comparative Example 3.3 | 2 to 6 | 0.15 to 0.25 | 8 to 40 | 79.2 | 0.68 | 7.4 | 2343 |

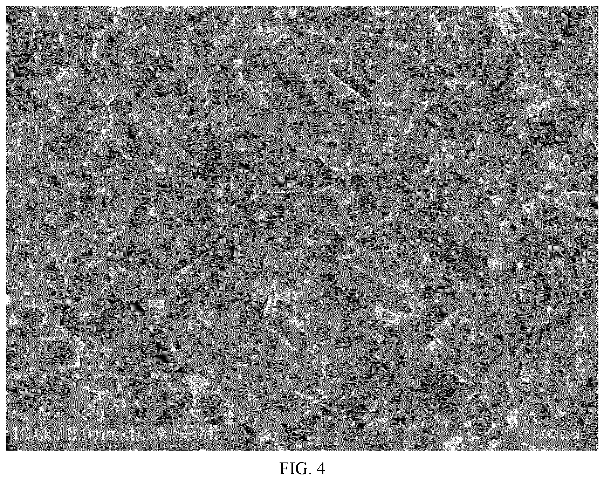

It can be seen from Table 9 that, as the content of $(Ti_{0.75}W_{0.25})C$ increases, the interaction between boron elements and titanium and tungsten elements strengthens, the content of flake-like grains increases, the toughness of the alloy increases, and the hardness of the alloy decreases. FIG. 4 is the grain morphology of the fracture of Comparative Example 3.2. When the content of flake-like grains is about 40 vol.% to 60 vol.% and the average grain size of the matrix ultrafine grains is in a range from 0.2 $\mu$m to 0.4 $\mu$m, the comprehensive performance of the alloy reaches its optimum. As the content of $(Ti_{0.75}W_{0.25})C$ continues to increase, on the one hand, the content of flake-like grains will exceed 60 vol.%, due to the bridging phenomenon among flake-like grains, the fracture toughness of the alloy decreases. When the amount of $(Ti_{0.75}W_{0.25})C$ added is too high, the grains are prone to grow, the thickness of flake-like grains will increase, the size of ultrafine grains will increase, and the volume content will decrease, resulting in a decrease in the hardness and toughness of the alloy.

Experimental group 4

Experimental group 4 comprises Example 1.2, Examples 4.1 to 4.4, and Comparative Examples 4.1 to 4.3, which mainly adjusted the content of tantalum element or niobium element and correspondingly adjusted the types and ratios of raw material powders, specifically as shown in Table 10.

Table 10. Chemical formulas and ratios (wt.%) of raw material powders used in Experimental group 4

| Case Number | Co | $(Ti_{0.75}W_{0.25})C$ | TaC | NbC | WB | $Cr_3C_2$ | VC | WC |
|---|---|---|---|---|---|---|---|---|
| Comparative Example 4.1 | 0.2 | 3.922 | 0.000 | 1.129 | 0.360 | 1.154 | 0.371 | balance |
| Example 4.1 | 0.2 | 3.922 | 1.066 | 1.129 | 0.360 | 1.154 | 0.371 | balance |
| Example 1.2 | 0.2 | 3.922 | 2.133 | 1.129 | 0.360 | 1.154 | 0.371 | balance |
| Example 4.2 | 0.2 | 3.922 | 3.199 | 1.129 | 0.360 | 1.154 | 0.371 | balance |
| Comparative Example 4.2 | 0.2 | 3.922 | 4.265 | 1.129 | 0.360 | 1.154 | 0.371 | balance |
| Example 4.3 | 0.2 | 3.922 | 2.133 | 0.000 | 0.360 | 1.154 | 0.371 | balance |
| Example 1.2 | 0.2 | 3.922 | 2.133 | 1.129 | 0.360 | 1.154 | 0.371 | balance |
| Example 4.4 | 0.2 | 3.922 | 2.133 | 2.258 | 0.360 | 1.154 | 0.371 | balance |
| Comparative Example 4.3 | 0.2 | 3.922 | 2.133 | 3.388 | 0.360 | 1.154 | 0.371 | balance |

The preparation methods of Examples 4.1 to 4.4 and Comparative Examples 4.1 to 4.3 referred to Example 1.
The chemical composition test results of the binderless cemented carbide obtained from Example 1.2, Examples 4.1 to 4.4, and Comparative Examples 4.1 to 4.3 were shown in Table 11.

Table 11. Chemical composition ratio (wt.%) of binderless cemented carbide in Experimental group 4

| Case Number | Co | Ti | Ta | Nb | B | Cr | V | W | C |
|---|---|---|---|---|---|---|---|---|---|
| Comparative Example 4.1 | 0.2 | 1.50 | 0.00 | 1.00 | 0.02 | 1.00 | 0.30 | 89.435 | 6.545 |
| Example 4.1 | 0.2 | 1.50 | 1.00 | 1.00 | 0.02 | 1.00 | 0.30 | 88.434 | 6.546 |
| Example 1.2 | 0.2 | 1.50 | 2.00 | 1.00 | 0.02 | 1.00 | 0.30 | 87.433 | 6.547 |
| Example 4.2 | 0.2 | 1.50 | 3.00 | 1.00 | 0.02 | 1.00 | 0.30 | 86.432 | 6.548 |
| Comparative Example 4.2 | 0.2 | 1.50 | 4.00 | 1.00 | 0.02 | 1.00 | 0.30 | 85.431 | 6.549 |
| Example 4.3 | 0.2 | 1.50 | 2.00 | 0.00 | 0.02 | 1.00 | 0.30 | 88.493 | 6.487 |
| Example 1.2 | 0.2 | 1.50 | 2.00 | 1.00 | 0.02 | 1.00 | 0.30 | 87.433 | 6.547 |
| Example 4.4 | 0.2 | 1.50 | 2.00 | 2.00 | 0.02 | 1.00 | 0.30 | 86.373 | 6.607 |
| Comparative Example 4.3 | 0.2 | 1.50 | 2.00 | 3.00 | 0.02 | 1.00 | 0.30 | 85.313 | 6.667 |

The microstructure and properties of the cemented carbide obtained in Example 1.2, Examples 4.1 to 4.4, and Comparative Examples 4.1 to 4.3 were tested, as shown in Table 12.

Table 12. Comparison of microstructure and performance parameters of binderless cemented carbides obtained from Experimental group 4

| Case Number | Flake-like grain size ($\mu$m) | | | Flake-like grain content (vol.%) | Average grain size of ultrafine grains ($\mu$m) | **Fracture** toughness $K_{1C}$ (MPa·m$^{1/2}$) | Hardness (HV10) |
|---|---|---|---|---|---|---|---|
| | Equivalent circle diameter | thickness | Equivalent circle diameter /thickness | | | | |
| Comparative Example 4.1 | 2 to 5 | 0.10 to 0.20 | 10 to 50 | 46.2 | 0.32 | 7.7 | 2482 |
| Example 4.1 | 2 to 5 | 0.10 to 0.20 | 10 to 50 | 45.8 | 0.31 | 7.8 | 2478 |
| Example 1.2 | 2 to 5 | 0.10 to 0.20 | 10 to 50 | 45.7 | 0.28 | 7.9 | 2463 |

(continued)

| Case Number | Flake-like grain size (μm) | | | Flake-like grain content (vol.%) | Average grain size of ultrafine grains (μm) | **Fracture** toughness $K_{1C}$ (MPa·m$^{1/2}$) | Hardness (HV10) |
|---|---|---|---|---|---|---|---|
| | Equivalent circle diameter | thickness | Equivalent circle diameter /thickness | | | | |
| Example 4.2 | 2 to 5 | 0.10 to 0.20 | 10 to 50 | 46.2 | 0.27 | 7.9 | 2441 |
| Comparative Example 4.2 | 2 to 5 | 0.10 to 0.20 | 10 to 50 | 46.3 | 0.25 | 7.9 | 2428 |
| Example 4.3 | 2 to 5 | 0.10 to 0.20 | 10 to 50 | 45.4 | 0.28 | 7.8 | 2476 |
| Example 1.2 | 2 to 5 | 0.10 to 0.20 | 10 to 50 | 45.7 | 0.28 | 7.9 | 2463 |
| Example 4.4 | 2 to 5 | 0.10 to 0.20 | 10 to 50 | 46.3 | 0.25 | 7.9 | 2455 |
| Comparative Example 4.3 | 2 to 5 | 0.10 to 0.20 | 10 to 50 | 45.8 | 0.24 | 7.9 | 2432 |

It can be seen from Table 12 that, the change in the content of TaC and NbC has little effect on the formation of flake-like grains. However, due to the decrease in the content of TaC and NbC, the content of WC needs to be correspondingly increased, which leads to an increase in the hardness of the alloy and a slight decrease in fracture toughness. The main purpose of adding TaC and NbC is to help improve the oxidation resistance of the alloy.

Experimental group 5

Experimental group 5 comprises Example 1.2, Examples 5.1 to 5.4, and Comparative Examples 5.1 to 5.4, which mainly adjusted the content of chromium element or vanadium element, and correspondingly adjusted the types and ratios of raw material powders, as shown in Table 13.

Table 13. Chemical formulas and ratios (wt.%) of raw material powders used in Experimental group 5

| Case Number | Co | $(Ti_{0.75}W_{0.25})C$ | TaC | NbC | WB | $Cr_3C_2$ | VC | WC |
|---|---|---|---|---|---|---|---|---|
| Comparative Example 5.1 | 0.2 | 3.922 | 2.133 | 1.129 | 0.360 | 0.577 | 0.371 | balance |
| Example 5.1 | 0.2 | 3.922 | 2.133 | 1.129 | 0.360 | 0.923 | 0.371 | balance |
| Example 1.2 | 0.2 | 3.922 | 2.133 | 1.129 | 0.360 | 1.154 | 0.371 | balance |
| Example 5.2 | 0.2 | 3.922 | 2.133 | 1.129 | 0.360 | 1.385 | 0.371 | balance |
| Comparative Example 5.2 | 0.2 | 3.922 | 2.133 | 1.129 | 0.360 | 1.731 | 0.371 | balance |
| Comparative Example 5.3 | 0.2 | 3.922 | 2.133 | 1.129 | 0.360 | 1.154 | 0.124 | balance |
| Example 5.3 | 0.2 | 3.922 | 2.133 | 1.129 | 0.360 | 1.154 | 0.248 | balance |
| Example 1.2 | 0.2 | 3.922 | 2.133 | 1.129 | 0.360 | 1.154 | 0.371 | balance |
| Example 5.4 | 0.2 | 3.922 | 2.133 | 1.129 | 0.360 | 1.154 | 0.494 | balance |
| Comparative Example 5.4 | 0.2 | 3.922 | 2.133 | 1.129 | 0.360 | 1.154 | 0.618 | balance |

The preparation methods of Examples 5.1 to 5.4 and Comparative Examples 5.1 to 5.4 referred to Example 1.
The chemical composition test results of the binderless cemented carbides obtained from Example 1.2, Examples 5.1 to 5.4, and Comparative Examples 5.1 to 5.4 were shown in Table 14.

Table 14. Chemical composition ratio (wt.%) of binderless cemented carbide in Experimental group 5

| Case Number | Co | Ti | Ta | Nb | B | Cr | V | W | C |
|---|---|---|---|---|---|---|---|---|---|
| Comparative Example 5.1 | 0.2 | 1.50 | 2.00 | 1.00 | 0.02 | 0.50 | 0.30 | 87.974 | 6.506 |
| Example 5.1 | 0.2 | 1.50 | 2.00 | 1.00 | 0.02 | 0.80 | 0.30 | 87.649 | 6.531 |
| Example 1.2 | 0.2 | 1.50 | 2.00 | 1.00 | 0.02 | 1.00 | 0.30 | 87.433 | 6.547 |
| Example 5.2 | 0.2 | 1.50 | 2.00 | 1.00 | 0.02 | 1.20 | 0.30 | 87.216 | 6.564 |
| Comparative Example 5.2 | 0.2 | 1.50 | 2.00 | 1.00 | 0.02 | 1.50 | 0.30 | 86.891 | 6.589 |
| Comparative Example 5.3 | 0.2 | 1.50 | 2.00 | 1.00 | 0.02 | 1.00 | 0.10 | 87.665 | 6.515 |
| Example 5.3 | 0.2 | 1.50 | 2.00 | 1.00 | 0.02 | 1.00 | 0.20 | 87.548 | 6.532 |
| Example 1.2 | 0.2 | 1.50 | 2.00 | 1.00 | 0.02 | 1.00 | 0.30 | 87.433 | 6.547 |
| Example 5.4 | 0.2 | 1.50 | 2.00 | 1.00 | 0.02 | 1.00 | 0.40 | 87.317 | 6.563 |
| Comparative Example 5.4 | 0.2 | 1.50 | 2.00 | 1.00 | 0.02 | 1.00 | 0.50 | 87.201 | 6.579 |

The microstructure and properties of the binderless cemented carbide obtained in Example 1.2, Examples 5.1 to 5.4, and Comparative Examples 5.1 to 5.4 were tested, as shown in Table 15.

Table 15. Comparison of microstructure and performance parameters of binderless cemented carbides obtained from Experimental group 5

| Case Number | Flake-like grain size ($\mu$m) | | | Flake-like grain content (vol.%) | Average grain size of ultrafine grains ($\mu$m) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter /thickness | | | | |
| Comparative Example 5.1 | 4 to 6 | 0.20 to 0.50 | 8 to 30 | 44.9 | 0.82 | 6.9 | 2362 |
| Example 5.1 | 3 to 6 | 0.20 to 0.30 | 10 to 30 | 46.2 | 0.35 | 7.4 | 2436 |
| Example 1.2 | 2 to 5 | 0.10 to 0.20 | 10 to 50 | 45.7 | 0.28 | 7.9 | 2463 |
| Example 5.2 | 2 to 4 | 0.10 to 0.20 | 10 to 40 | 46.1 | 0.26 | 7.6 | 2479 |
| Comparative Example 5.2 | 2 to 3 | 0.10 to 0.20 | 10 to 30 | 46.8 | 0.22 | 6.8 | 2487 |
| Comparative Example 5.3 | 4 to 6 | 0.40 to 0.60 | 6 to 15 | 44.5 | 0.78 | 6.8 | 2385 |
| Example 5.3 | 3 to 6 | 0.20 to 0.30 | 10 to 30 | 45.3 | 0.33 | 7.5 | 2434 |
| Example 1.2 | 2 to 5 | 0.10 to 0.20 | 10 to 50 | 45.7 | 0.28 | 7.9 | 2463 |
| Example 5.4 | 2 to 4 | 0.10 to 0.20 | 10 to 40 | 46.5 | 0.25 | 7.8 | 2484 |
| Comparative Example 5.4 | 2 to 3 | 0.10 to 0.20 | 10 to 30 | 45.9 | 0.21 | 6.7 | 2497 |

It can be seen from Table 15 that, when the contents of $Cr_3C_2$ and VC are relatively low, the inhibitory effect on the growth of matrix grains is relatively weak, and the matrix grains grow significantly, resulting in lower hardness of the alloy. As the contents of $Cr_3C_2$ and VC increase, the size of the flake-like grains decrease, the ratio of the polygonal equivalent circle diameter/thickness of the flake-like grains decreases, and the grain size of the matrix also decreases accordingly, while the content of flake-like grains is not significantly affected. Therefore, the hardness of the alloy increases while the toughness decreases. However, when the content of $Cr_3C_2$ and VC is too high, agglomeration is likely to occur during the sintering process, which may be due to the presence of boron element easily attracting Cr element for agglomeration, thereby increasing the brittleness of the alloy, and the fracture toughness shows a trend of first increasing and then decreasing.

Experimental group 6

Comparative Example 6.1 provides a binderless cemented carbide and its preparation method, which differs from Example 1.2 only in that the $(Ti_{0.75}W_{0.25})$C raw material powder in Example 1.2 was replaced with TiC powder, while the rest is the same as Example 1.2.

The microstructure and properties of the binderless cemented carbide obtained from Comparative Example 6.1 and Example 1.2 were shown in Table 16.

Table 16. Comparison of Properties and Microstructure Parameters of Binderless cemented carbides

| Case Number | Flake-like grain size (μm) | | | Flake-like grain content (vol.%) | Average grain size of ultrafine grains (μm) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter /thickness | | | | |
| Example 1.2 | 2 to 5 | 0.10 to 0.20 | 10 to 50 | 45.7 | 0.28 | 7.9 | 2463 |
| Comparative Example 6.1 | The material is not sintered densely, and further testing is not performed | | | | | | |

It can be seen from Table 16 that the direct use of TiC powder will cause an increase in the temperature required for sintering densification. For Comparative Example 6.1, due to the low temperature for vacuum-sintering, the residual pores in the pre-sintered body are mostly open pores, which do not meet the requirements of the next step of hot isostatic pressing for the density of the pre-sintered body. Therefore, the material is not sintered densely and further testing is not performed.

Experimental group 7

This comparative example provides a cemented carbide and preparation method therefor, which differs from Example 1.2 only in that the vacuum-sintering temperature in Example 1.2 is reduced to 1520°C (Comparative Example 7.1) and increased to 1600°C (Comparative Example 7.2), respectively, while the rest is the same as Example 1.2.

The microstructure and properties of the binderless cemented carbide obtained from Comparative Example 7.1, Comparative Example 7.2, and Example 1.2 were shown in Table 17.

Table 17. Comparison of properties and microstructure parameters of binderless cemented carbides obtained

| Case Number | Flake-like grain size (μm) | | | Flake-like grain content (vol.%) | Average grain size of ultrafine grains (μm) | Fracture toughness $K_{1C}$ (MPa·m$^{1/2}$) | Hardness (HV10) |
|---|---|---|---|---|---|---|---|
| | Equivalent circle diameter | Thickness | Equivalent circle diameter/thickness | | | | |
| Comparative Example 7.1 | The material is not sintered densely, and further testing is not performed | | | | | | |
| Example 1.2 | 2 to 5 | 0.10 to 0.20 | 10 to 50 | 45.7 | 0.28 | 7.9 | 2463 |
| Comparative Example 7.2 | 4 to 8 | 0.50 to 1.00 | 4 to 16 | 65.2 | 1.4 | 6.3 | 2252 |

It can be seen from Table that, by reducing the vacuum-sintering temperature, in Comparative Example 7.1, due to the lower vacuum-sintering temperature, the residual pores in the pre-sintered body are mostly open pores, which did not meet the requirements of the next step of hot isostatic pressing for the density of the pre-sintered body. Therefore, the material is not sintered densely, and further testing is not performed. As the vacuum-sintering temperature increases, the grains grow significantly, the ratio of the polygonal equivalent circle diameter/thickness of the flake-like grains in Comparative Example 7.2 decreases sharply, and the matrix grains have grown to the micrometer level, which ultimately lead to a sharp decrease in fracture toughness and hardness.

The above are only preferred embodiments of the present invention and are not intended to limit the present invention. For those skilled in the art, the present invention may have various modifications and variations. Any modifications, equivalent substitutions, improvements made within the spirit and principles of the present invention shall be included within the scope of protection of the present invention.

**Claims**

1. A binderless cemented carbide, **characterized in that**,

   the cemented carbide mainly comprises hard phases;
   the grain morphology of the hard phase comprises ultrafine grains and flake-like grains, wherein the ultrafine grains have an average grain size ranging from 0.2 μm to 0.4 μm, and the flake-like grains are in a shape of polygonal flakes, a ratio of polygonal equivalent circle diameter to thickness of the flake-like grains is (10 to 60):1.

2. The binderless cemented carbide according to claim 1, **characterized in that**, the volume content of the flake-like grains in the binderless cemented carbide is in a range from 10% to 70%;

   preferably, the polygonal equivalent circle diameter of the flake-like grains is in a range from 2 μm to 6 μm, and the thickness of the flake-like grains is in a range from 0.1 μm to 0.3 μm; and
   preferably, the flake-like grains are uniformly distributed in the polycrystalline matrix formed by the ultrafine grains.

3. The binderless cemented carbide according to claim 1, **characterized in that**, in terms of mass percentage, the chemical composition of the binderless cemented carbide comprises: 0% to 1% of binder phase metal, 0.01% to 0.03% of boron, 0.5% to 3% of titanium, 1% to 3% of tantalum, 0% to 2% of niobium, 0.8% to 1.2% of chromium, 0.2% to 0.4% of vanadium, 6.303% to 6.841% of carbon, with the balance being tungsten and inevitable impurities.

4. The binderless cemented carbide according to claim 3, **characterized in that**, in terms of mass percentage, the chemical composition of the binderless cemented carbide comprises: 0.1% to 0.6% of binder phase metal, 0.01% to 0.03% of boron, 1% to 2% of titanium, 1.5% to 2.5% of tantalum, 0.5% to 1.5% of niobium, 0.9% to 1.1% of chromium, 0.2% to 0.4% of vanadium, 6.423% to 6.653% of carbon, with the balance being tungsten and inevitable impurities; preferably, the binder phase metal is selected from at least one of cobalt, nickel, and iron.

5.  A method for preparing the binderless cemented carbide according to any one of claims 1 to 4, comprising:

    proportioning and weighing raw material powders according to the chemical composition of the binderless cemented carbide, and then mixing the raw material powders to obtain a powdery mixture; and
    treating the powdery mixture before sintering to obtain a green body to be sintered, and sintering the green body to be sintered.

6.  The method according to claim 5, **characterized in that**, the preparation process of the powdery mixture comprises: mixing the raw material powders proportioned and weighed according to the chemical composition of the binderless cemented carbide by wet ball-milling, and then drying it;

    preferably, the raw material powder comprises: binder phase metal powder, titanium tungsten carbide powder, tantalum carbide powder, niobium carbide powder, tungsten borides powder, chromium carbide powder, vanadium carbide powder, tungsten carbide powder, and inevitable impurities;
    preferably, the binder phase metal powder is a single metal powder or an alloy powder, and when the binder phase metal powder is cobalt powder, the content of hexagonal close-packed crystal structure in the powder is greater than 90 wt.%;
    preferably, the titanium tungsten carbide powder is a solid solution powder with a chemical formula of $(Ti_xW_{1-x})C$, x=0.6 to 0.8;
    preferably, the tungsten borides powder is WB powder; and
    preferably, an overall average particle size of the raw material powder is in a range from 0.1 $\mu$m to 1.5 $\mu$m; more preferably, an average particle size of the tungsten carbide powder is in a range from 0.1 $\mu$m to 0.4 $\mu$m, an average particle size of the binder phase metal powder is in a range from 0.2 $\mu$m to 0.6 $\mu$m, and an average particle size of other raw material powders is in a range from 0.1 $\mu$m to 1.5 $\mu$m.

7.  The method according to claim 6, **characterized in that**, the process of mixing by wet ball-milling comprises: firstly, ball-milling the other powders except for the binder phase metal powder and a shaping agent powder for 24h to 36h, then adding the binder phase metal powder and ball-milling for 24h to 36h, and finally adding the shaping agent powder and ball-milling for 15h to 20h;

    preferably, the shaping agent powder is at least one of paraffin wax and polyethylene glycol;
    preferably, a mass ratio of ball-to-powder used in the wet ball-milling is (4 to 6): 1; and
    preferably, a medium used for wet ball-milling is alcohol.

8.  The method according to claim 5, **characterized in that**, the treating process before sintering comprises: molding the powdery mixture to obtain a preliminary green body, and debinding the preliminary green body to obtain a green body to be sintered.

9.  The method according to claim 5, **characterized in that**, the process of sintering the green body to be sintered comprises: firstly, vacuum-sintering the green body to be sintered to obtain a pre-sintered body, and then performing hot isostatic pressing sintering on the pre-sintered body;

    preferably, the vacuum-sintering is carried out at a temperature ranging from 1540°C to 1580°C and a pressure less than or equal to 30Pa for a holding time ranging from 1h to 3h;
    preferably, the hot isostatic pressing sintering is carried out at a temperature ranging from 1400°C to 1450°C and a pressure ranging from 150MPa to 300MPa for a holding time ranging from 1h to 3h; and
    more preferably, the hot isostatic pressing sintering is carried out under an inert atmosphere.

10. Use of the binderless cemented carbide according to any one of claims 1 to 4 or prepared by the method for preparing the binderless cemented carbide according to any one of claims 5 to 9 in the preparation of cutting tools, molds, or mining tools.

FIG. 1

FIG. 2

FIG. 3

FIG. 4

## INTERNATIONAL SEARCH REPORT

| International application No. |
| --- |
| **PCT/CN2024/074388** |

| A. | CLASSIFICATION OF SUBJECT MATTER |
| --- | --- |

C22C29/08(2006.01)i; C22C29/06(2006.01)i; C22C29/02(2006.01)i; C22C29/00(2006.01)i; C22C1/10(2023.01)i; B22F3/00(2021.01)n

According to International Patent Classification (IPC) or to both national classification and IPC

| B. | FIELDS SEARCHED |
| --- | --- |

Minimum documentation searched (classification system followed by classification symbols)

IPC:C22C B22F

Documentation searched other than minimum documentation to the extent that such documents are included in the fields searched

Electronic data base consulted during the international search (name of data base and, where practicable, search terms used)

CNTXT, ENTXTC, VEN, WPABSC, WEB OF SCIENCE, CNKI: 硬质合金, 等轴, 粒状, 超细晶, 长厚比, (直径 s 厚度 s 比), 径厚比, 纵横比, 长宽比, 层片, 片层, 片状, 层状, 板状, (真空 2w 烧结) or (真空 2W 处理), (无 or 不含) 1w (粘结剂 or 粘结相 or 结合相), 无钴, 低钴, 少钴, 无Co, 低Co, 少Co, 碳化钛钨, 钛钨碳, Cemented carbide, Ti?W????C, boron, B, titanium, ti, Tantalum, ta, Vanadium, V, chrome, chromium, cr, Sheet, layer??, ply, plate, Equiax??

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116949334 A (XIAMEN TUNGSTEN CO., LTD. et al.) 27 October 2023 (2023-10-27) claims 1-10 | 1-10 |
| Y | DE 102014204277 A1 (FRAUNHOFER-GESELLSCHAFT ZUR FOERDERUNG DER ANGEWANDTEN FORSCHUNG E.V.) 10 September 2015 (2015-09-10) description, paragraphs 1, 10-11, 14-16, 31, 34, 42, 44, and 46 | 1-2, 5-10 |
| Y | JP H1136022 A (TOSHIBA TUNGALOY CO., LTD.) 09 February 1999 (1999-02-09) description, paragraphs 8, 13, and 16, and table 2 | 1-2, 5-10 |
| Y | JP 2005068479 A (TUNGALOY CORP.) 17 March 2005 (2005-03-17) description, paragraph 16 | 6 |
| Y | CN 110205534 A (TAIZHOU RUIAN CEMENTED CARBIDE TOOLS CO., LTD.) 06 September 2019 (2019-09-06) description, paragraphs 5, 31, and 34 | 6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 April 2024** | **25 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/074388** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106350721 A (CENTRAL SOUTH UNIVERSITY) 25 January 2017 (2017-01-25) entire document | 1-10 |
| A | KR 20100088997 A (SNU R&DB FOUNDATION) 11 August 2010 (2010-08-11) entire document | 1-10 |

Form PCT/ISA/210 (second sheet) (July 2022)

## INTERNATIONAL SEARCH REPORT
### Information on patent family members

International application No.

**PCT/CN2024/074388**

| Patent document cited in search report | | | Publication date (day/month/year) | Patent family member(s) | | | Publication date (day/month/year) |
|---|---|---|---|---|---|---|---|
| CN | 116949334 | A | 27 October 2023 | None | | | |
| DE | 102014204277 | A1 | 10 September 2015 | DE | 102014204277 | B4 | 15 June 2023 |
| JP | H1136022 | A | 09 February 1999 | None | | | |
| JP | 2005068479 | A | 17 March 2005 | None | | | |
| CN | 110205534 | A | 06 September 2019 | None | | | |
| CN | 106350721 | A | 25 January 2017 | CN | 106350721 | B | 29 June 2018 |
| KR | 20100088997 | A | 11 August 2010 | None | | | |

Form PCT/ISA/210 (patent family annex) (July 2022)